# EUROPEAN PATENT SPECIFICATION

(11) **EP 4 497 188 B1**
(45) Date of publication and mention of the grant of the patent: **11.03.2026**
(21) Application number: 23713577.7
(22) Date of filing: 21.03.2023
(51) Int. Cl.: H02J 7/00

(54) **A METHOD OF CHARGING BATTERIES CONNECTED IN A BATTERY STRING**
VERFAHREN ZUM LADEN VON IN EINEM BATTERIESTRANG VERBUNDENEN BATTERIEN
PROCÉDÉ DE CHARGE DE BATTERIES CONNECTÉES DANS UNE CHAÎNE DE BATTERIES

(30) Priority: 23.03.2022 DK PA202270132
(43) Date of publication of application: 29.01.2025
(73) Proprietor: KK Wind Solutions A/S, 7430 Ikast (DK)
(72) Inventor: BEDE, Lóránd, 7400 Herning (DK); NIELSEN, Rasmus, 7330 Brande (DK); JENSEN, Jesper, 7430 Ikast (DK)
(74) Representative: Patentgruppen A/S
(86) International application number: PCT/DK2023/050046
(87) International publication number: WO 2023/179831

(56) References cited:
- EP-B1- 3 185 388
- CN-B- 101 916 887
- US-A1- 2011 089 898
- US-A1- 2012 086 390

## Description

### Field of the invention

The present invention relates to a method of charging battery modules connectable in a battery string and an energy storage comprising such battery string.

### Background of the invention

Energy storage based on strings of individually controllable battery modules are known in the art e.g. from applicants own international patent application published with publication number WO2019223845A1. In this publication, it is described how a controller may control which of the series connected battery module that should be connected based on e.g. state of charge of the individual battery modules.

In prior art document US9093730 it is described how connection of a load to one or more battery modules can be used to equalise the state of charge across battery modules of an energy storage.

In prior art document US10063082 it is disclosed to measure state of charge of battery cells of the battery modules and based on a comparison of result of measuring a controller selects the battery modules having the battery cell with the lowest state of charge.

In prior art document US2011089898 a first and second DCDC converter and battery modules connected in series forming a battery string. A current conversion switch module forms a path of a charge current between the battery module and second DCDC converter to allow charge current to be applied to a particular battery cell comprising the battery module. A microprocessor determines a battery cell to be charged and controls the switch module.

A problem not solved in the art is how to select a battery module to charge or discharge when all battery modules are having substantially the same state of charge.

### Summary of the invention

In an aspect, the present invention solves the above-mentioned problem by a method of charging battery modules connected in a battery string, wherein the connectivity of said battery modules to said battery string is controlled by a switching arrangement associated with each individual of said battery modules. The battery modules to be charged are selected based on a first state of charge estimation method and subsequently based on a second state of charge estimation method. The charging is initiated based on said first state of charge estimating method that includes the following steps: a) establish state of charge of said battery modules, b) control connectivity of said battery modules to said battery string according to said established state of charge so as to balance state of charge among said battery modules. The charging characterized in that it is completed based on said second state of charge estimation method that includes the following steps: c) associate said battery modules with a unique battery module identification, d) establish a battery module current, e) establish battery cell voltage of battery cells comprised by said battery modules, f) control connectivity of said battery modules to said battery string according to said battery module identifications, g) charge said battery module connected to said battery string for a determined period of time, and h) continue step d) - g) until said established battery cell voltages for all battery cells of a battery module reaches a predetermined value at a predetermined value of said battery module current.

The battery string may be implemented as one phase of a three phased energy storage providing backup supply to an industrial load such as a motor. Hence, the capacity of the battery string is typically above 1kWh such as 2 or 3 kWh.

Selecting and charging the battery modules during the first and subsequently during the second state of charge estimating method is advantageous in that it has the effect that a reliable state of charge can be established for each of the battery modules. Further, the second state of charge estimating method is advantageous in that it has the effect, that the coulomb counting (if that is used during the first method) is reset.

The battery cells are typically of the Li-Ion type, therefore, due to the voltage characteristics of a battery module, reliable state of charge estimations cannot be established without the voltage measurement of the second state of charge estimating method. This however is not possible to establish, again according to the voltage characteristics, unless the battery module is either almost completely discharged or charged i.e. unless the state of charge of the battery module is between e.g. 0%-10% or 90%-100%. Thus, to ensure this for all battery modules, the establishing of stage of charge not based on voltage measurement is made in the first state of charge estimating method.

The selection of modules to be charge described according to the present invention is especially advantageous in the situation, where the charging voltage available from the power supply does not have sufficient power to charge all modules simultaneously. Hence, it allows charging battery modules from any power supply independent of capacity in terms of power and voltage.

According to an embodiment of the invention, the connectivity of said battery modules in a discharge mode is controlled by a string controller according to a desired battery string output capacity of at least 1kWh. The energy storge and thereby the individual battery modules are designed to high-power applications i.e. the energy storage may serve as power backup to loads of 1-5kWh or even larger.

According to an embodiment of the invention, wherein said state of charge is established based on coulomb counting. This method is advantageous in that it has the effect, that it is fast, relatively precise and does not require much processing power from a controller. By relatively precise should be understood precise enough to align state of charge among the battery modules within a range of ±5% and often with in a range of ±1%.

According to an embodiment of the invention, wherein said first state of charge estimation method further include the step of sorting said battery modules according to said established state of charge. This is advantageous in that it has the effect, that the controller can connect the battery modules to the battery string according to the battery modules position on the list. Hence, if the task is to fully charge the battery modules, the controller can select battery modules from one end of the list and if the task is to fully discharge the battery modules, the controller can select battery modules from the opposite end of the list.

According to an embodiment of the invention, said string controller selects a first charging method group of said battery modules to be connected to said battery string according to said sorting. This is advantageous if the charging power voltage available is not sufficient to charge all battery modules connectable to the battery string. Then the battery modules having the lowest state of charge can be charge first, the battery modules having the hights state of charge can be discharged first, a particular battery module can be assigned a higher or lower priority (in terms of connection to the battery string), etc.

With respect to assigning priority, it should be mentioned, that a particular battery module could be given a high priority for several reasons including service, maintenance or replacement.

According to an embodiment of the invention, wherein said string controller replace a battery module from said first charging method group of battery modules with a battery module not part of said first charging method group when the difference in state of charge therebetween is more than 0.1% or when said battery module from said first charging method group of battery modules has been included in said first charging method group for at least 10us. Waiting at least 10us before swapping two battery modules (one part of the first method group with one not part of the first method group) is advantageous when there is a certain defined difference between the two to avoid too many battery module swaps. This is also referred to as hysteresis. The time could be between 10us and 200us or higher. One example could be 100us.

According to an embodiment of the invention, said sorting is updated with the same frequency as the state of charge is updated. This is advantageous in that it has the effect, that a list of battery modules sorted by state of charge of the battery modules is always updated and synchronized with the most recent state of charge estimations made on the battery modules.

According to an embodiment of the invention, said first state of charge estimating method terminates when the state of charge of said plurality of battery modules is within a range of 100% to 90%, preferably 100% to 95%, most preferably 100% to 98%.

According to an embodiment of the invention, said plurality of battery modules have substantially the same state of charge when the voltage of said plurality of battery modules reach a predetermined battery module voltage.

According to an embodiment of the invention, said predetermined battery module voltage is within a range of 10V, preferably 5V, most preferably 2.5V. Hence if the battery module voltages are within 10V, 5V or even 2.5V the first state of charge estimation method is considered terminate. The first state of charge estimating method is advantageous in that it balances or aligns state of charge among the battery modules. The most correct state of charge estimation is based on voltage of the battery cell / module. Which when using Li-ion battery cells at least is possible to measure when the SoC of the battery module is above e.g. 90% SoC

According to an embodiment of the invention, said unique battery module identification is an arbitrary number unique for only one battery module. The unique identification can be a simple number originating e.g. from the physical location of the battery module in the battery string / electric cabinet. The unique identification is advantageous in that if not all battery modules can be charged / discharged simultaneously, the controller is able to rotate battery modules to ensure all is charged / discharged.

According to an embodiment of the invention, wherein said battery module current is measured at one end of said battery string.

According to an embodiment of the invention, said battery module current is measured in a battery module. It may be advantageous to measure current in the battery module to be sure the correct current are used. For the state of charge estimation / calculation the result may be improved if the current measured in the battery module is used instead of a string voltage. It may depend on whether a battery module is connected to the string or not.

According to an embodiment of the invention, said battery module current is measured with a frequency between 2kHz and 20kHz, preferably between 5kHz and 15kHz, most preferably between 8kHz and 12kHz. Because the battery modules are series connected, the current through battery modules connected to form the battery module current can be measured any location in the battery string. this means either before the first battery module or after the last battery module in the string. one current measurement is advantage in that only one current sensor is available. Alternatively, the battery module current can be measured at the individual modules if current sensors are available.

According to an embodiment of the invention, said battery module comprises a plurality of series connected battery cells and wherein establishing said battery cell voltage include establishing battery cell voltage of each battery cells of said battery module. Preferably, the voltage of all battery cells of a battery module is established.

According to an embodiment of the invention, said battery cell voltage is measured by a battery monitoring system. The battery module voltage or battery cell voltage may be measured e.g. by a voltage sensor that may be a standalone sensor communicating with the controller or be part of the battery monitoring system

According to an embodiment of the invention, wherein said battery cell voltage is measure with a frequency of at least 1Hz, preferably at least 5Hz, most preferably 10Hz

According to an embodiment of the invention, said string controller selects a second charging method group of said battery modules to be connected to said battery string according to said unique battery module identification. This is advantageous in that the state of charge of the battery modules of this second method group can be brought closer to or at 100% state of charge. No sorting according to state of charge established by the first method is done at this point in the charging process in that upon the termination of the first part of the charging process the state of charge is substantially the same and preferably close to 100% such as above 95% state of charge among all battery modules.

According to an embodiment of the invention, said string controller replace a battery module from said second charging method group of battery modules with a battery module not part of said second charging method group after a rotation period of time has elapsed. The frequency of rotation of battery modules of the second method group of battery modules with battery modules being charged during the second charging period with battery modules outside this second charging method group may be regulated by a rotation time period to ensure all battery modules not yet being at a 100% state of charge reaches 100% state of charge.

According to an embodiment of the invention, said rotation period of time is dynamic in dependency of the ratio of the number of battery modules being change to the number of battery modules not being charged. A dynamic rotation period of time is advantage to allow alignment of the time period each individual battery module is being charge and thereby ensuring equally SoC increase in all modules.

According to an embodiment of the invention, said rotation period of time is between 2000ms and 2ms, preferably 1000ms and 50ms, most preferably 500ms and 100ms.

According to an embodiment of the invention, replacement of which battery module of said second charging method group of battery modules with a battery module not part of said second charging method group is determined based on the unique battery module identification. The order of replacement and time of charge is not imported as long as the controller ensures that all battery modules not yet having reached 100% state of charge is include in the rotation.

According to an embodiment of the invention, said string controller replace a battery module from said second charging method group of battery modules with a battery module not part of said second charging method group if the battery cell voltage of all individual battery cells of that battery module is less than 0.5V from said predetermined value. This is advantageous in that it has the effect, that if a battery module comprise a battery cell that has a voltage which for some reason is far from the voltage specified for that particular type of battery cell at 100% state of charge, this battery module can be maintained in the battery string and thus be charged for longer time than the rest of the battery modules. This will lead to a faster alignment of all battery modules at 100% state of charge.

According to an embodiment of the invention, a battery module comprising battery cells all having a battery cell voltage at said predetermined value is removed from rotation. In this case, the battery module is considered to have a state of charge of 100%. Thus, no more charging of that particular battery module is allowed. Instead battery modules having battery cells not yet with a battery cell voltage at the predetermined value can be included in a heavier rotation and thereby the complete battery string can charged faster.

According to an embodiment of the invention, a battery module having a battery cell with a battery cell state of charge that is more than 0.1% from the state of charge of the rest of the battery cells of that battery module, that battery module is prioritized by said string controller when said string controller is controlling connectivity to said battery string. That a battery module is prioritized should in this context be understood as being connected to the battery string more often or for a longer period of time compared to the rest of the battery modules connectable to the battery string. In this way this battery module can be brought faster to 100% state of charge and thereby the likelihood of all battery modules reaching 100% state of charge at more or less the same time is increased.

According to an embodiment of the invention, said steps d) - g) continues to the established battery cell voltage of each battery cell of said battery modules connectable to the battery string reaches said predetermined value. When the battery voltage of all battery cells of all battery modules are at the predetermined value, the battery string has reached 100% state of charge.

According to an embodiment of the invention, said predetermined value is a predetermined value for a battery cell voltage, and wherein said steps e) - g) continues until the established battery cell voltage of each battery cell of each battery module connectable to said battery string reaches said predetermined value for a battery cell voltage. This is advantageous in that at the time where the voltage of each battery cell connectable to the battery string reached the predetermine value, all battery modules have reached 100% state of charge.

It should be mentioned, that if a battery cell is defect, it may not be possible for that particular battery cell / battery module comprising the defect battery cell to reach the predetermined value of battery cell voltage. In this situation the second state of charge estimating method is terminated when the battery cells of the battery modules not including a defect battery cell has reached the predetermined value. A battery module having a defect battery cell may be determined if the cell is not fully charge with in a predetermined period of time. The predetermined period of time may start when all other battery module are charge. The predetermined period of time may in this situation be between 5 and 60 minutes, such as between 15 and 30 minutes.

According to an embodiment of the invention, the predetermined value for battery cell voltage is determined from technical data associated with the battery cell.

According to an embodiment of the invention, the predetermined value is a value specified in a data sheet. Such technical data is typically provided by the manufacture of the battery module / battery cell and available in a datasheet for the battery module / battery cell. Thus, a battery module having reached 100% state of charge is in an embodiment a battery module of which the battery cell voltage of all battery cells has reach a predetermined voltage level.

According to an embodiment of the invention, said first state of charge estimating method is terminated when said second state of charge estimating method is in use. Because the first state of charge estimating method is only used to align or balance the battery modules, and is not optimal to determine if a battery module is 99% or 100% state of charge, it is not used when the second estimation method takes over and selects battery modules to be charged.

According to an embodiment of the invention, at least one battery module is selected for an individual rotation. This is advantageous in that it has he effect, that independent of state of charge, the state of charge of one battery module can be controlled independently of other battery modules. This include always include such battery module on top / at bottom of the list sorted according to state of charge independent of its state of charge. Thereby the wear of one battery module can be controlled differently than the others i.e. a non-uniform load of battery modules across a battery string can be established.

According to an embodiment of the invention, the individual rotation include forcing said at least one battery module in a charging or in a discharging sequency. This is advantageous in that in this way a battery module may be forced to be discharged to a determined state of charge / battery voltage, then charged to a determined state of charge / battery voltage and so on without any pauses. This way of operating such battery module wears out the battery module faster than other battery modules that is not individually rotated. This leads to a reduced wear of the remaining battery modules and thereby an expected prolonged lifetime thereof. One reason such non-uniform control of load of a battery module may be that it is planned to be replaced i.e. having a fixed end of life time.

Hence, in fact how much load one battery module may be exposed to before a fixed end of life day may be estimated e.g. based on temperature development, change in maximum battery voltage, time to reach a minimum battery voltage, etc.

In an aspect of the invention, the method according to any of the paragraphs [0006] to [0044] is implemented in an apparatus according to any of the paragraphs [0046]-[0054]

An aspect of the invention relates to an energy storage comprising a plurality of battery modules mutually connectable by switching arrangements to form a battery string, wherein each of said plurality of battery modules comprises a plurality of series connected battery cells and a switching arrangement. A string controller is configured to select and charge battery modules to be charged based on a first state of charge estimation method and subsequently based on a second state of charge estimation method, wherein said string controller is configured to a) establish state of charge of said plurality of battery modules according to said first state of charge estimation method, and b) select a first group of battery modules to be charged based on said established state of charge and charge said first group of battery modules. c) establish a battery module current, d) establish battery cell voltage of battery cells comprised by said plurality of battery modules, wherein said string controller is characterized in that it is configured to:e) select a second group of battery modules to be charged based on a unique battery module identification associated with each of said plurality of battery modules and charge said second group of battery modules for a determined period of time, and f) continue step c) - e) until a battery cell voltage for all battery cells of said plurality of battery module has reached a predetermined value at a predetermined value of said battery module current.

According to an embodiment of the invention, said battery string is comprises by an energy storage having at least three battery strings.

According to an embodiment of the invention, said switching arrangement comprises four switches in an H-bridge configuration.

According to an embodiment of the invention, the output voltage of said battery module is between 20V and 200V.

According to an embodiment of the invention, the output voltage of said battery string is between 20V and 1000V.

According to an embodiment of the invention, the output voltage of said battery cells is between 2V and 5V.

According to an embodiment of the invention, the output power of said battery string is between 25KW and 125KW with a storage capacity between 2,5kWh and 50kWh. The 25KW could be at a string voltage of 230V and the 125KW could be at a string voltage of 1000V.

According to an embodiment of the invention, the weight of said battery module is between 5Kg and 200Kg.

According to an embodiment of the invention, the dimensions of said battery module is between 40cm and 70cm such as 60cm x between 10cm and 20 cm such as 15 cm x between 15cm and 25 cm such as 20cm (Length x Width x Height).

An energy storage according to any of the paragraphs [0046]-[0054] implementing a method according to any of the paragraphs [0006]-[0044].

### The drawings

For a more complete understanding of this disclosure, reference is now made to the following brief description, taken in connection with the accompanying drawings and detailed description, wherein like reference numerals represent like parts:
- Fig. 1: illustrates an example of a battery string,
- Fig. 2: illustrates an example of a battery sting with a battery monitoring system,
- Fig. 3a and 3b: illustrate examples of a switching arrangement,
- Fig. 4: illustrates a flow chart describing the method of selecting and charging battery modules,
- Fig. 5: illustrates an example of control of charging current, and
- Fig. 6: illustrates a Voltage and Current curve during charge of a battery module.

### Detailed description

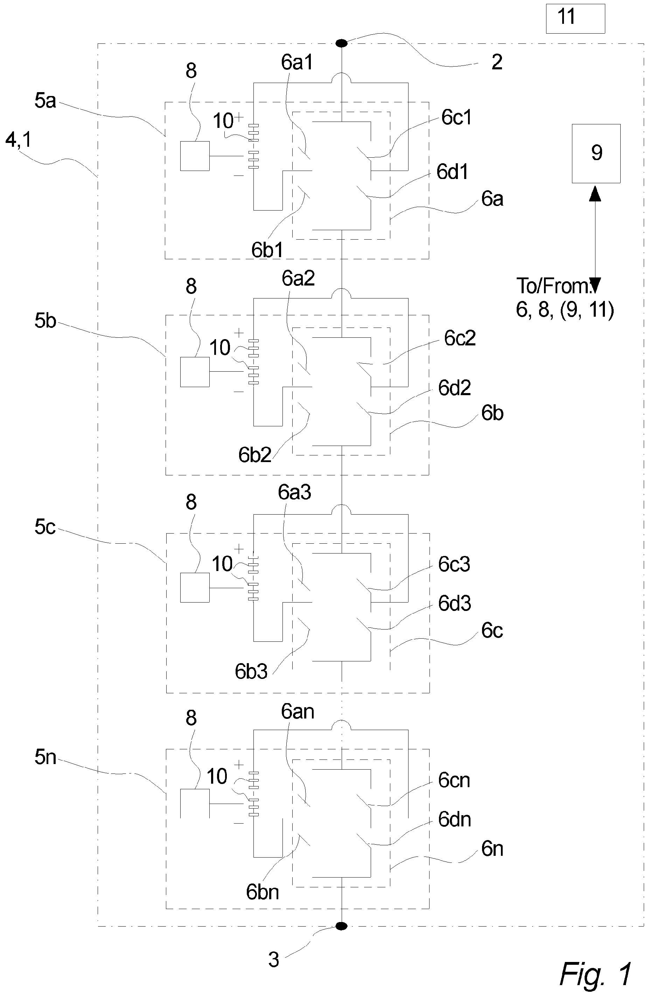

Fig. 1 illustrates an energy storage 1 according to an embodiment of the invention. For simplicity, the illustrated energy storage 1 only includes one string 4, however the inventive control method may be applied to several strings of the same energy storage. This is indicated by the arrow from string controller 9, that indicates, that data communication between additional string controllers (also denoted 9) and external controllers denoted 11 can occur. Further, an energy storage controller 17 may also be provided at least in the case of more than one string. The energy storage controller and external controller 11 may provide overall control, coordination between strings, provide control references to the string controller, etc.

Accordingly, the string is two or more connected battery modules, so when referring to a module connected to the string or bypassing the string a reference is made to a connection or bypass of at least two connected modules. With this said the output of a battery string may also be only the output from one module. In this embodiment one module may be considered as string.

The energy module 1 may also be referred to as a battery module in that the preferred energy storage elements thereof are batteries. In the same way the string 4 may also be referred to as a battery string 4. The energy storage 1 illustrated on Fig. 1 only include one string 4 comprising four battery modules 5a-5n each associated with a switching arrangement 6 controlling connectivity to of the associated battery module to the string 4. Accordingly, if an energy storage 1 includes two, three, four, five, six or more parallel battery strings, the SoC (SOC; State of Charge) of the individual battery modules of each of these battery strings can be controlled according to the present invention

The number of strings 4 of an energy storage 1 may vary between 1 and 25 or even more, typically the number of stings reflects the number of phases and / or consumption of the system to which the energy storage is connected. In the strings, the modules 5 are series connected and each string typically comprises between 1 and 20 modules 5, preferably between 5 and 15. It should be mentioned that modules 5 of a string 4 may be connected in parallel and that cells 10 of a module 5 may be connected in parallel. The number of modules 5 and thereby battery cells 10 is determined by the desired output voltage of the string 4 / module 5 which is preferably higher than the peak voltage of the electric network to which the energy storage 1 is connected.

The battery cells 10 are preferably of the li-ion type (other battery types may also be used) since the characteristics of this battery type complies with the requirements of the high-power energy storage 1 and the environment of e.g. a wind turbine. A problem in terms of SoC determination with the Li-ion type battery cell is that due its voltage characteristics it is hard to know the SoC unless it is being cycled according to the method of the present invention.

As an example, one battery cell 10, may be a 3.2V cell which when connected in series with e.g. 14 similar cells 10 adds up the module voltage to 48V. As an example, a complete discharged battery cell may have a cell voltage of 2V or less and a complete charged battery cell may have a cell voltage of 54V or more.

Hence in this example, the energy storage 1 comprise one 48V (approx.) battery module which can be controlled by the switches 10 of the energy storage module 8. The capacity of the battery cells is preferably between 10Ah and 200Ah or even higher, but as mentioned this is a design choice based on requirements to the energy storage 1 and price of the system. Especially in the preferred embodiment where the switches 10 are mounted on a printed circuit bord, the maximum current is determined as the lower of the maximum current allowed through the current path 7 of the printed circuit board and the maximum battery current.

The switching arrangements 6a-6n illustrated on Fig. 1 each includes four switches 6a-6d. However, it should be noted, that battery strings 4 having switching arrangements 6 only with two switches may also fall with the scope of the invention. The main difference between connecting a battery module 5 to the string by a switching arrangement having two and one having four switches is that in the embodiment with four switches the polarity of the battery module output voltage can be reversed. With this in mind, the invention will now be describe with reference to the figures illustrating an energy storage 1 only comprising one battery string 4 and having switching arrangements 6 including four switches.

The energy storage 1 illustrated on Fig.1 include one battery string 4 (referred to also simply as string) comprising four battery modules 5a, 5n (referred to also simply as modules). However, as indicated by the dotted line (the electric connection) between switching arrangements 6c an 6n controlling module 5c and 5n, additional modules could be included in the string 4.

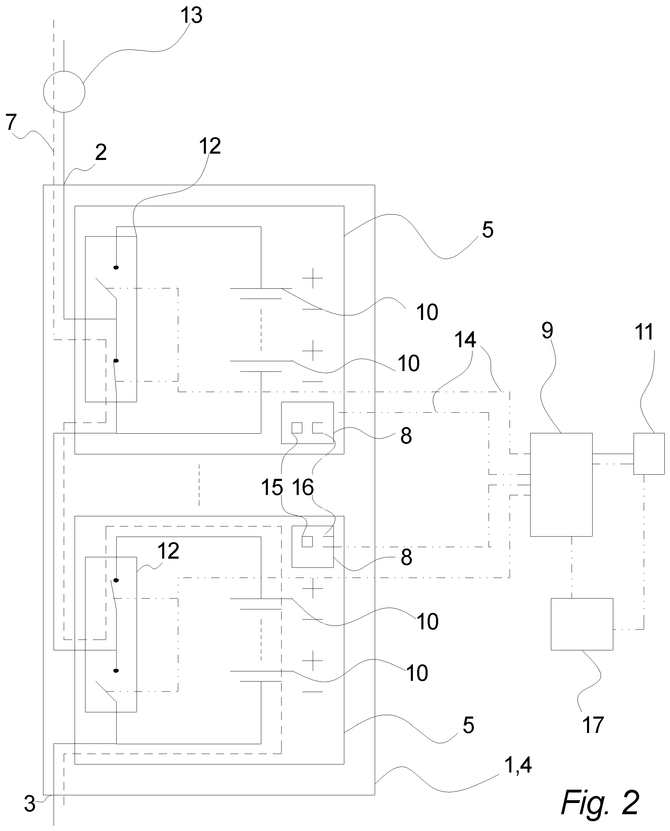

Fig. 2 illustrates a battery string with a battery monitoring system 8. Each module 5 comprises a plurality of series connected battery cells 10, preferably Li-Ion battery cells. It should be noted, that also Li-Ion capacitors or a combination of Li-ion capacitors and Li-Ion batteries may be used. A reference to an operation parameter such as e.g. capacity, voltage, SoC, etc. of a module 5 below refers to a capacity, voltage, SoC, etc. of the series connected battery cells 10 of the module 5. An operation parameter could be temperature, capacity, voltage, current, SoC, cycle, state of health, time since last time an energy module has been used or has been fully charged / discharged, internal resistance, number of cycles, number of switching of the switches, historic on-time, etc.

Further, each module 5 also includes a battery monitoring module / system 8 communicating with the battery string controller 9 (referred to simply as controller). The BMS (BMS; Battery Monitoring System) 8 comprises for voltage measuring circuit / sensor allowing monitoring of voltage of each of the battery cells 10 of the module 5.

The BMS 8 may further comprise sensors / circuits for measuring e.g. the current running through the battery module 5. Further, sensors / circuits for measuring temperature of the battery module 5 / the individual battery cells 10 may also be included as part of the BMS 8. The BMS 8 preferably also comprise a data storage via where information associated with the battery module 5 and battery cells 10 may be stored. This information may include last measured cell and / or module voltage, module cell and / or module SoC, temperatures, cycle count, bibliographic information of the module and / or cells such as time of installation, type of cell and / or module, etc.

At least some of the input received by the controller 9 may be received from the BMS 8 associated or connected to each of the modules 5. The BMS 8 may be included on a battery module print along with sensors or communicating with sensors external to such module print. The battery module print may communicate with the string controller 9 via a data communication interface / communication protocol that use wireless or wired signal path 14. The battery module print may include information of the battery module cells 10 of the battery module 5. Hence, in the memory of the battery module print at least some of the following is stored, type of battery cell 10, (if the battery module includes capacitors or a combination of batteries or capacitors this information is also present), number of battery cells 10, capacity of such cells 10 and thereby of the entire battery module 5 (e.g. 25Ah to 50Ah), manufacture of the cells 10, production date of print and / or cells, installation date of battery module 5 in the string 4, times / cycles the module 5 / cells 10 has been in use, temperature characteristics of the cells 10, SoC of the individual cells 10, etc.

Together internal voltage sensor 16 (preferably one for each battery module / cell), current sensor (if any at the individual module 5), and the battery module print may be referred to as BMS 8. The battery module print may include communication interface between the associated switch arrangement 6 and the string controller 9 and provide information of the modules 5 and switch arrangement 6 to the string controller 9.

Further, it should be mentioned that the battery module print may not comprise a micro-processor for processing date. A battery measuring chip may be included on be battery module print. Hence the intelligence may be centralised in the string controller 9. The voltage sensor 16 may measure the voltage of the total number of cells 10 and / or measure the voltage of each of the cells 10. In the same way, a temperature sensor 15 may be part of the battery print and thereby provide temperature information of the battery module 5 and / or cells 10 to the string controller 9. Only one current sensor may be used and connected to the string controller to determine the current in the current path.

The string 4 is in one end connected to a first energy storage terminal 2 and in the other end to a second energy storage terminal 3. Hence, the controller 9 may control the switching arrangements 6a-6n to establish a battery string 4 comprising a plurality of battery modules 5 and thereby allow a current path 7 through the battery string 4 between the first and second terminals 2, 3.

The string controller 9 may be any kind of industrial micro-controller, PLC (PLC; Programmable Logic Controller) and may communicate with other controllers including external controllers 11 and internal controller such as an energy storage controller 17 (if the energy storage comprises more than one string 4). The external controller could e.g. be a wind turbine controller, service provider, grid administrator, wind power plant controller, switches of the switching arrangements, etc. Alternatively, if present, it may be an energy storage controller, coordinating control of multiple battery string controllers, which is communicating with an external controller e.g. to obtain a reference voltage for the battery string voltage. As illustrated communication may be provide via communication lines (optical or wired) 14 or wireless.

The string controller 9 may receive input of operation parameters such as ambient temperature, voltage / voltage reference, current / current reference etc. of the system to which the energy storage 1 is connected, from external systems, sensors, controllers, storages, etc. This together with information received from current sensors, voltage sensors temperature sensor (if any), information stored on the memory of the controller 9 or BMS 8, the controller 9 uses to determine e.g. state of charge / state of health of the individual modules 5, direction of current flow (when possible) in the current path 7, establish desired voltage (in terms of type (AC /DC), and size), frequency or power compensation, selection and control of polarity, conducting, non-conducting or bypass of battery modules 5, etc. A storage such as one of the BMS 8 may also comprise information of production date of print BMS 8, module 5, cells 10, installation date of battery module 5 in energy storage 1, switching information such as type, number of cycles, etc.

With respect to selection, it should be mentioned, that a particular battery module could be selected to be included or excluded in the rotation. In other words, one battery module could be said to be in a heavier rotation that others i.e. include more often in e.g. discharging sequency than other. Several reasons for putting one battery module in a heavier rotation than other exists including service, scheduled maintenance or replacement. One reason is that it may be determined to put a battery module in a heavier rotation than others because it is weak, it is close to its expiry date, it's operation parameters (such as temperature) deviate from expected, etc.

In this situation such battery module may be used as much as possible because it is to be replaced and therefore it is possible to get at much capacity out of it as possible before it is replaced. Thereby other battery modules need not to be used as much and thereby the lifetime thereof may be prolonged.

A heavier rotation may include that a battery module is forced to be positively connected or be negatively connected (charging or discharging). It could also be that it is taken out of rotation such as being bypassed most or all of the time.

A battery cell may be unavailable if it e.g. is defect or comprise a defect battery cell. The health status of a battery module 5 may refer to the number of times the particular module 5 has been charged / discharge. The high number, the closer to end of life time of the module hence, the string controller 9 may keep track of this number and activate module 5 trying to keep this number more or less the same i.e. balanced for all modules 5 of the energy storage 1 / string 4. In the same way, health of the switching arrangement 6 can also be estimated based on the number of times switches hereof has been switching.

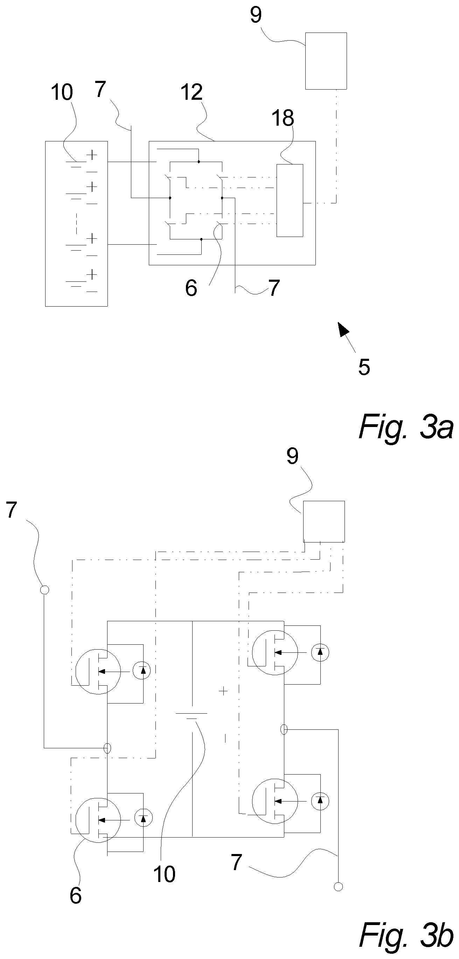

The switching arrangements 6a-n illustrated in Fig. 1 and Fig. 3a and Fig. 3b comprises a plurality of switches denoted 6a1, 6a2, 6a3, 6a4, 6b1, ...6n4. These switches are preferably provide on a printed circuit board comprising at least gate drives 18 for the switches. The switches of one battery modules is denoted 6x1-6x4 where x symbolise the module a, b, c, ...n on the figures. As mentioned above, the switches 6x1-6x4 are controlled by the string controller 9 and by control hereof it is possible to either include the battery module in or bypass the battery module from the current path 7 through the string 4. Note that the inclusion or bypass of a battery module may also be facilitated by a switching module comprising only two switches.

The status of a switch in this document is referred to as either conducting mode or non-conducting mode. Hence, due to the illustrated H-bridge configuration of the switches 6x1-6x4, a battery module can be controlled to a first polarity or reverse polarity when connected to the remaining modules 5 forming the string 4 or being bypassed i.e. disconnected from the remaining modules 5 forming the string 4. When bypasses, a module 5 is bypassed, current may still be conducted by the switching arrangement 6.

As mentioned, the string controller 9 may receive information from sensors, battery module print, BMS 8, external controllers, etc. The string controller 9 knows the status of the switches in that they are controlled by the string controller (including historic use of the modules), hence based on this information the string controller is able to determine the most optimised way of operating the string i.e. determine which battery modules that should be included in the current path through the string 4 at what point in time i.e. depending on requirement / capacity from load connected to the string. Hence, the string controller 9 e.g. receives information regarding a string current and know which modules that are connected to the string to establish / absorb this current and preferably also hardware configuration of the battery module. This information is used to determine which battery modules that is going to be used i.e. connected to the string according to an overall control strategy such as balancing state of charge, etc. or according to temperature, state of health, etc.

The status of a semiconductor switch 6x1-6x4 is changed between a conducting mode (switch closed) and a non-conducting mode (switch open). A deadtime between change from one status of the switch to another status is preferably adjustable between 10 nanoseconds and 1 microsecond, typically the value is a couple of 100 nanoseconds.

Preferably, the switches 6a-6d are semiconductor switches of the IGBT (IGBT; Insulated Gate Bipolar Transistor), MOSFET (MOSFET; Metal-Oxide-Semiconductor Field-Effect Transistor) type , GaN transistors (Gan; Gallium Nitride) or SiC transistors (SiC; Silicon Carbide), however other types of switches can also be used.

Preferably, commodity switches are chosen in that they are well tested and low in price. The commodity switches are typically not designed for operation in high voltage (e.g. above 1000V) and with high currents (e.g. above 500A) so the number of switches if commodity switches are used is higher compared to designs using switches designed for higher voltage and currents. However, the increased number is compensated by the lower price of the commodity switches. A preferred type of switch 6 for use in the present invention is designed to currents of 100A and voltages of 50V. At higher voltages of the preferred types of switches, the on-resistance of the semiconductor switch 6 is increasing and thereby the power loss in the switch 10.

Accordingly, the current path 7 is established between the terminals 2, 3 via which a load can be connected to the energy storage 1. The load may be a high power load such as a one phased or three phased load (in case of a three phased load, three strings 4 are required), the load could be an AC or a DC load, the load could be the utility grid, in this case, load would be able to charge the energy storage 1 and discharge the energy storage. A high power load in this context would by a load above 1kWh, above 2kWh, above 3kWh and up to a limit specified by the capacity of the battery modules connectable to the battery string 4.

Preferably each battery module 5x in the battery string 4 is connectable to the current path 7 via an associated switching arrangement 6x, in that it provides the most flexibility in controlling the output of the energy storage 1 (x denotes to actual module / switch pair a, b, c or n on the figures). However, one or more modules may be connected to the current path 7 directly or via a switching arrangement 6 which is different from the majority of switching arrangements 6.

Preferably, the connection of terminals of the battery modules 5 to the switching arrangements 6 are made in the same way at each battery module. This is because then it becomes easier to programme and thereby control the current path 7. With this said, it should be mentioned, that this is not a requirement. Hence, the terminals of the battery module 5 are electrically connected to the switching arrangements 6 in the same way i.e. between the two left and right switches respectively or between the two top and bottom switches respectively.

The energy storage 1 of the present invention can be used in several applications and for several reasons. To list a few, the energy storage 8 could be connected to the output of a generator of a wind turbine. Such generator is connected to a first end of an electric current path, the second end of which is connection to the utility grid. Between the generator and the utility grid a converter is typically located in the electric current path. Such converter may comprise a generator side converter connected to a grid side converter via a direct current (DC) link. Other configurations of a wind turbine may also be suitable for use with the present invention.

The energy storage 1 can be used in relation to all types of energy systems including photovoltaic systems, utility grid, local island grids, car chargers with internal energy storage, wind turbines systems comprising converters including DFIG (DFIG; Doubly Fed Induction Generator) converters, Full power level back-to-back, Full power level back-to-back, MMC (MMC; M Modular Multi-Level Converter), etc. The energy storage 1 can be located between the converter and the grid, in fact, it can be connected either in the dc link or between the converter and the transformer including a stator path of a DFIG configuration, in fact, it can be place on any AC or DC power line. Further, the energy storage 1 can be used in relation to all types of wind turbine generators including Induction Generator, Permanent Magnet Sync. Generator, Doubly Fed Induction Generator, Synchronous Generator, etc.

Further, the energy storage 1 can be used energy storage or grid support. One or more energy storages can be used as power supply to ships either when these are in harbour or between harbours to reduce use of fossil fuel generators and to reduce load on the electric grid of the harbour.

It should be noted that the energy storage 1 including battery modules 5 preferably is located inside an electric cabinet. The electric cabinet protects the energy storage from environmental impact and may help maintaining a desired temperature, direct flow of cooling air, etc. Locating the energy storage 1 in an electric cabinet is advantageous in that it is possible to located in sites of e.g. a wind turbine or other extreme sites.

Fig. 3a and Fig. 3b schematically illustrates a battery module 5. The switches 6 are implemented on a switch printed circuit board 12. It is illustrated, that the switch printed circuit board 12 includes all four switches 6 together with gate drivers 5 controlling the switches 10. The gate drives 5 may be galvanic isolated from the current path 7 through the switches 6. The galvanic isolation may be implemented as part of the gate driver 5.

The string controller 9 may facilitate charging or discharging of modules 5 of the battery string 4 by controlling connectivity of the modules to the string. It is desired that the SoC of all modules are substantially the same to utilize the full capacity of the string and to ensure equal load of the modules.

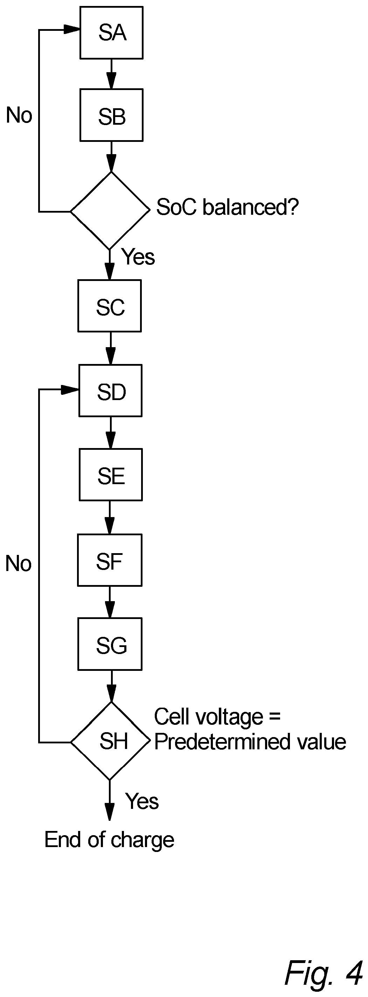

The present invention suggests a method of selecting and charging (or discharging) battery modules 5 which is especially advantageous in situations, where the charging voltage is not sufficient to charge all battery modules in a string simultaneously. The method is described with reference to the flow chart of Fig. 4.

In this case, if a string 4 comprises e.g. twelve modules 5, but only eight can be charged at the time by the voltage from the available power supply, a problem may occur. If not rotation between the twelve modules are made, eight modules will be fully charged first. The charging voltage is too high for the remaining four modules and thus bleed resistors connectable by a switch parallel to the cells of four of the fully charged modules need to be connected in series with the four not fully charged modules. This however has the effect, that the charging current is reduced to the milli amp area leading to a significant increase in charging time for the four remaining modules which is not desired.

The power supply used to charge the modules may be the utility grid, a wind turbine generator, a photovoltaic plant, etc. The number of battery modules that can be charged from a power source may be determined e.g. by the power source voltage or the capacity in terms of available current in the power source.

Step a, therefore, to ensure substantially the same SoC among the modules 5, the string controller 9 continuously establish the SoC of the modules 5 and control connectivity hereof to the string 4 according to the established SoC. Hence, the SoC could be said to be a primary sorting criteria for the controller when selecting battery modules to charge. Preferably, it is the string controller that establish the SoC in that the string controller is controlling the if a module is connected to or disconnected from the string.

One way of establishing SoC of a module 5 is to measured module current / string current and integrate that in time (also known as Coulomb counting). Using the Coulomb counting to establish the SoC as the first state of charge estimating method is advantageous in that it is easy to implement and does not required much calculation from the data processor of the string controller.

With this said, the first method cannot stand alone because if e.g. a module is replaced, the SoC of the new modules is unknown or untrusted. As mentioned, the battery module may comprise a data storage comprising bibliographic information fo the module / cells. Part of this information may be the SoC of the module. However, e.g. due to internal discharge, the actual SoC may be less than the SoC stored in the data storage. Thus, the second part of the charging method based on voltage measurement is used as a supplement to the Coulomb counting.

An alternative to the Coulomb counting may be the so-called Kalman estimation which however require more in dept knowledge of the module and required more computational power.

A battery module 5 according to the present invention is not fully charged (100% SoC) before the battery cells voltage of all battery cells of the module reaches a predetermined battery cell voltage which can be found in a data sheet of the battery cell. By using e.g. the Coulomb counting method it may not be known if one cell of the module is far from reaching the predetermined cell voltage or if all cells are close to reaching the predetermined cell voltage. At least for this reason, the Coulomb counting is not always sufficient to determine if a module is not fully charged. Further, the Coulomb counting may also suffer from drifting as the current measurement may not be completely correct.

Step b, in an embodiment, the connectivity of modules forming the string is controlled according to a dynamic list of the battery modules that is sorted according to the established SoC as the primary sorting criteria.

Hence, the modules 5 may be sorted into the dynamic performance list based on the established SoC with the energy modules having the highest SoC placed first on the dynamic list and the energy module having the lowest SoC placed last on the list. The string controller 9 then utilize this list to select which energy modules to turn on and turn off (connect to or bypass from the string) in order to establish the energy storage output (discharge modules) of which modules to charge.

It should be noted that before two modules can shift place on the list, the one module now having the higher SoC preferably, when comparing to the other module, has a SoC that is higher than a threshold value to avoid too many shifting of modules. This is also referred to a hysteresis in the control of connectivity of the modules. Of course the hysteresis may also be implemented when the list is sorted according to lowest SoC.

Further, it should be noted that if the SoC of one module for some reason is significantly lower that other modules, this module is included in heavier rotation than other modules.

The SoC estimations does not have to be made with a higher frequency than the update of the list. Hence, if the list is updated every 10ms, then the SoC estimation should be made every 10ms or faster. The updated times may be determined by the available charging current, hence if this is not too high, the updated frequency is not too high such as measured in seconds or maybe minutes.

After a period of time, where the 8 modules to be charged have been selected by the SoC e.g. established by Coulomb counting, the SoC of all twelve battery modules is more or less the same such as all with in ±10% e.g. all between 100% and 90% SoC. At least the SoC is aligned as good as the Coulomb counting allows.

The present invention then ensure completely full charged battery modules by use of a second state of charge estimating method that does not select battery modules to be charged based on list sorted according to SoC. Instead, the battery modules to be charged are now selected according to a secondary criteria.

Step c, accordingly, the modules 5 are associated with such secondary criteria which is a unique battery modules identification based on which the string controller is able to differentiate one module from the other modules. In practise, such unique battery module identification could by an arbitrary number determined based on the e.g. the physical location of the battery module in an electric cabinet, the battery module number or name already used by the string controller when controlling the battery modules, etc.

Step d, to be able to determine if an individual battery cell 10 of a module has reached 100% SoC, the cell voltage has to match a predetermined value when the charging current is below a specific value. These values may be determined from a data sheet of the cell. Therefore, the string current is established e.g. by a current sensor located in the battery string. The current through the string is the same as the current running through the series connected modules 5.

Step e, with knowledge of the current running through a module 5 and thereby through the cells 10 of the module only the voltage over each individual cell of the module is needed to establish if the module is completely charged. Therefore, the cell voltage is established, e.g. by a voltage sensor of the BMS 8, and used together with the established current to determine SoC of the individual battery cells 10. The may be done by the string controller 9.

Step f, if the string controller 9 determines that all battery cells of a module is completely charged i.e. having a cell voltage of the predetermined value at a predetermined current, that battery module is taken out of rotation. As long as the battery modules are not fully charged they are kept in the rotation and thereby charged as one of the eight modules from the example above.

The rotation i.e. which module that is connected to other modules, thereby forming a string, may be determined by the secondary criteria. In this way, it is possible for the controller to ensure that all modules are being charged. The secondary criteria may include measured cell voltage.

Step g, the charging time i.e. the time a module is connected to the string (other modules) i.e. conducting a current is determined by the string controller 9 as a time period equally split between modules or split between modules according to the established cell voltages. If the cell voltages are more or less the same, the time a battery module is connected to another battery module during this phase is typically below one second.

Step h, the steps of establishing the string current and cell voltages and used these parameters to determine if a battery module is fully charged and if not control connectivity of the module to each other to ensure full charge of all modules are continued until the cell voltage reaches a predetermined value at a given current.

An energy storage can be determined as fully charged when all cells of all modules are fully charged. As an example, the above steps can be implements as a software algorithm that integrates the measure current in time to establish the SoC of the individual modules. The software algorithm then control which of the modules that should be connected according to the established SoC.

Either simultaneously or when the SoC of the individual modules is aligned to a satisfying level, the software algorithm may compare measured cell voltages (at a measured current) to a predetermined value (for cell voltage) and if the voltage of all cells of a module reaches a satisfying value, the controller may determine that that module is completely charged.

In an embodiment, a module is completely charged if the voltage of each of its cells satisfies an equation such as (Vₘₐₓ - Vₘᵢₙ) < 50mV and the voltage of at least one cell equals Vₘₐₓ where is Vₘₐₓ = 3,65V. Of course the value of the Vₘₐₓ voltage and the delta valve between Vₘₐₓ and Vₘᵢₙ may be adjusted according to the specific type of cells and characteristics thereof. Further, the equation should be satisfied at a charging current which is below a predetermined charging current value. Both the values for the Vₘₐₓ voltage and the charging current may be found in a data sheet.

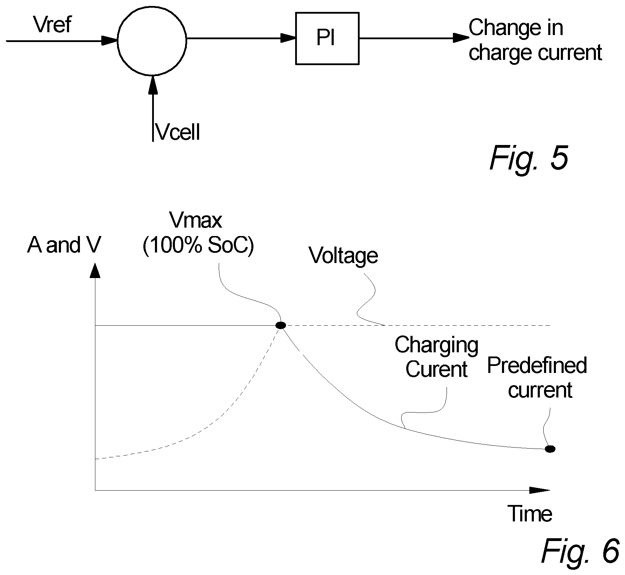

Fig. 5 is a simple illustration of the control of the charging of the selected battery modules. As illustrated, the controller receives a reference voltage that is compared to a measure voltage. The reference voltage could be the predetermined value for the battery cell / module voltage at 100% SoC. Hence, when the measured battery cell / module voltage is compared to the reference voltage it is known if the cell / module is fully charged. If this is not the case, the charging current is maintained by the PI regulator. If the measured voltage reached the value of the reference voltage, the cell / module is considered completely charged, and the PI regulator reduces the charging current.

During charging, the current through a modules to be charged is stabile while the voltage of the modules increases. When the predetermined value for the battery cell voltage is reached for all cells in a module and the current also meats the fully charge criteria, the battery module has reached 100% SoC.

The charging current is controlled according the diagram illustrated on Fig. 5. The voltage reference is the predetermined voltage established from a data sheet. The measured voltage is the maximum measured cell voltage of cell of modules connected in the string and if one cell of all of the cells in the string (i.e. of the connected modules) reached the reference voltage, the charging current is regulated (decreased as illustrated on fig. 6). Hence, the charging current is reduced for all remaining cells / modules of the string. If the cell voltage of all cells of a module is reached before a cell of another module reaches the reference voltage, this module can be removed from the string / rotation and the charging current can again be increased to its maximum

Hence, as more and more cells reaches the voltage reference the charging current is more and more reduced. Thus, the rotation frequency of modules is not critical as the charging current towards the end of the charging of the modules is reduced so the modules (cells thereof) is not charged very fast. The module 5 reached 100% SoC when the cell voltage of all cells 10 is at Vmax and the current simultaneously reaches the predefined value. In an embodiment, the value of Vmax could be 3,65V and the predefined value of the current could be 2.5A.

A battery module of which all battery cells have reached the full charge criteria is set to 100% full i.e. state of charge is 100% of that module which is then taken out of rotation.

Software algorithm is stored in data storage of the string controller 9 or other suitable controllers. Alternative, the software algorithm may be stored on a portable storage or cloud based storage. Hence, the present invention may be implemented on the string controller or other controllers.

So far in this description, focus has been on selecting and charging battery modules. It should be mentioned that the same method could be used for discharging battery modules (with appropriate changes such as sorting according to lowest SoC). Discharging could be relevant if the modules / string is to be calibrated e.g. by a complete discharge. If eight modules are needed to supply a load, and one is being discharged completely the discharge of the remaining seven modules may be problematic. By discharging the eight modules as described above with respect to charging, this problem may be solved.

A complete discharge is also needed for determining the capacity of the battery modules. In determining capacity discharging to the so-called real 0% SoC is preferred. The real 0% SoC is not possible to determine by certainty e.g. by the coulomb counting method but by the present invention the real 0% SoC can be reached for sure. The real 0% SoC is reached when the cell voltage of all cells in a module has reached a predetermined value specified in e.g. a data sheet for the used type of battery cells. Typically, this value is around 2V. Hence, by the present invention a precise capacity determination can be made faster in that all modules can be discharged at the same time. This is in contrary to state of the art methods where only one module at the time is being discharged leading to a long discharge time.

Accordingly, the steps of discharging in an aspect of the invention is performed according to a first state of charge estimating that includes the step of establish state of charge of the battery modules and control connectivity of the battery modules to the battery string (i.e. to each other) according to the established state of charge so as to balance state of charge among the battery modules. Further, the discharging is made according to the steps of a second state of charge estimation method that includes the steps of associate the battery modules with a unique battery module identification, establish a battery module current, establish battery cell voltage of battery cells comprised by said battery modules, control connectivity of the battery modules to the battery string according to the battery module identifications and discharge the battery module connected to the battery string for a determined period of time. The steps of the second state of charge estimation method is continued until the established battery cell voltages for all battery cells of a battery module reaches a predetermined value.

It should be mentioned that even though the above steps of selecting and charging is described as a sequence of successive steps, the order of these steps may not be the same as the order in which they are described above.

From the above, it is now clear, that the present invention relates to a method of selecting and charging / discharging battery modules (battery cells hereof) of an energy storage. Simplified, the method comprises a first phase so to speak where SoC of the modules are aligned e.g. by Coulomb counting. Still simplified, the method further comprises a second phase so to speak where modules are being charged until the cell current and voltage reaches predetermined values.

### List

1. Energy storage
2. First energy storage terminal
3. Second energy storage terminal
4. Battery string / string
5. Battery module / module
6. Switching arrangement
7. Current path
8. Battery monitoring system
9. String controller
10. Battery cell
11. External controller
12. Switch printed circuit board
13. Current sensor
14. Communication lines
15. Temperature sensor
16. Voltage sensor
17. Energy storage controller
18. Gate drives

## Claims

1. A method of charging battery modules (5) connected in a battery string (4), wherein the connectivity of said battery modules (5) to said battery string (4) is controlled by a switching arrangement (6) associated with each individual of said battery modules (5),
wherein the battery modules (5) to be charged are selected based on a first state of charge estimation method and subsequently based on a second state of charge estimation method,
wherein said charging is initiated based on said first state of charge estimating method that includes the following steps:
a) establish state of charge of said battery modules (5),
b) control connectivity of said battery modules (5) to said battery string (4) according to said established state of charge so as to balance state of charge among said battery modules (5),
wherein said method is **characterized in that** said charging is completed based on said second state of charge estimation method that includes the following steps:
c) associate said battery modules (5) with a unique battery module identification,
d) establish a battery module current,
e) establish battery cell voltage of battery cells (10) comprised by said battery modules (5),
f) control connectivity of said battery modules (5) to said battery string (4) according to said battery module identifications,
g) charge said battery module connected to said battery string (4) for a determined period of time, and
h) continue step d) - g) until said established battery cell voltages for all battery cells (10) of a battery module reaches a predetermined value at a predetermined value of said battery module current.

2. A method according to claim 1, wherein the connectivity of said battery modules (5) in a discharge mode is controlled by a string controller (9) according to a desired battery string output capacity of at least 1kWh.

3. A method according to any of the preceding claims, wherein said string controller (9) selects a first charging method group of said battery modules (5) to be connected to said battery string (4) according to said sorting.

4. A method according to any of the preceding claims, wherein said string controller (9) replace a battery module from said first charging method group of battery modules (5) with a battery module not part of said first charging method group when the difference in state of charge therebetween is more than 0.1% or when said battery module from said first charging method group of battery modules (5) has been included in said first charging method group for at least 10us [microseconds].

5. A method according to any of the preceding claims, wherein said first state of charge estimating method terminates when the state of charge of said plurality of battery modules (5) is within a range of 100% to 90%, preferably 100% to 95%, most preferably 100% to 98%.

6. A method according to any of the preceding claims, wherein said battery module comprises a plurality of series connected battery cells (10) and wherein establishing said battery cell voltage include establishing battery cell voltage of each battery cells (10) of said battery module.

7. A method according to any of the preceding claims, wherein said string controller (9) selects a second charging method group of said battery modules (5) to be connected to said battery string (4) according to said unique battery module identification.

8. A method according to any of the preceding claims, wherein said string controller (9) replace a battery module from said second charging method group of battery modules (5) with a battery module not part of said second charging method group after a rotation period of time has elapsed.

9. A method according to any of the preceding claims, wherein replacement of which battery module of said second charging method group of battery modules (5) with a battery module not part of said second charging method group is determined based on the unique battery module identification.

10. A method according to any of the preceding claims, wherein said string controller (9) replace a battery module from said second charging method group of battery modules (5) with a battery module not part of said second charging method group if the battery cell voltage of all individual battery cells (10) of that battery module is less than 0.5V from said predetermined value.

11. A method according to any of the preceding claims, wherein a battery module having a battery cell (10) with a battery cell state of charge that is more than 0.1% from the state of charge of the rest of the battery cells (10) of that battery module, that battery module is prioritized by said string controller (9) when said string controller (9) is controlling connectivity to said battery string (4).

12. A method according to any of the preceding claims, wherein at least one battery module (5) is selected for an individual rotation.

13. An energy storage (1) comprising a plurality of battery modules (5) mutually connectable by switching arrangement (6)s to form a battery string (4), wherein each of said plurality of battery modules (5) comprises a plurality of series connected battery cells (10) and a switching arrangement (6),
wherein a string controller (9) is configured to select and charge battery modules (5) to be charged based on a first state of charge estimation method and subsequently based on a second state of charge estimation method,
wherein said string controller (9) is configured to:
a) establish state of charge of said plurality of battery modules (5) according to said first state of charge estimation method, and
b) select a first group of battery modules (5) to be charged based on said established state of charge and charge said first group of battery modules (5),
c) establish a battery module current,
d) establish battery cell voltage of battery cells (10) comprised by said plurality of battery modules (5),
wherein said string controller (9) is **characterized in that** it is configured to:
e) select a second group of battery modules (5) to be charged based on a unique battery module identification associated with each of said plurality of battery modules (5) and charge said second group of battery modules (5) for a determined period of time, and
f) continue step c) - e) until a battery cell voltage for all battery cells (10) of said plurality of battery module has reached a predetermined value at a predetermined value of said battery module current.

14. An energy storage (1) according to claim 13 wherein the output power of said battery string (4) is between 25KW and 125KW with a storage capacity between 2,5kWh and 50kWh.

15. An energy storage (1) according to any of the claims 13-14 implementing a method according to any of the claims 1-11.

## Patentansprüche

1. Verfahren zum Laden von Batteriemodulen (5), die in einem Batteriestrang (4) verbunden sind,
wobei die Konnektivität der Batteriemodule (5) mit dem Batteriestrang (4) durch eine Schaltanordnung (6), die mit jedem einzelnen der Batteriemodule (5) verknüpft ist, gesteuert wird,
wobei die Batteriemodule (5), die geladen werden sollen, basierend auf einem ersten Ladezustandsschätzverfahren und anschließend basierend auf einem zweiten Ladezustandsschätzverfahren ausgewählt werden,
wobei das Laden basierend auf dem ersten Ladezustandsschätzverfahren eingeleitet wird, das die folgenden Schritte einschließt:
a) Ermitteln eines Ladezustands der Batteriemodule (5),
b) Steuern von Konnektivität der Batteriemodule (5) mit dem Batteriestrang (4) gemäß dem ermittelten Ladezustand, um den Ladezustand zwischen den Batteriemodulen (5) auszugleichen,
wobei das Verfahren **dadurch gekennzeichnet ist, dass** das Laden basierend auf dem zweiten Ladezustandsschätzverfahren abgeschlossen wird, das die folgenden Schritte einschließt:
c) Verknüpfen der Batteriemodule (5) mit einer eindeutigen Batteriemodulkennung,
d) Ermitteln eines Batteriemodulstroms,
e) Ermitteln einer Batteriezellenspannung von Batteriezellen (10), die durch die Batteriemodule (5) umfasst sind,
f) Steuern von Konnektivität der Batteriemodule (5) mit dem Batteriestrang (4) gemäß den Batteriemodulkennungen,
g) Laden des Batteriemoduls, das mit dem Batteriestrang (4) verbunden ist, für eine bestimmte Zeitdauer, und
h) Fortsetzen der Schritte d) - g) bis die ermittelten Batteriezellenspannungen für alle Batteriezellen (10) eines Batteriemoduls einen zuvor bestimmten Wert bei einem zuvor bestimmten Wert des Batteriemodulstroms erreichen.

2. Verfahren nach Anspruch 1, wobei die Konnektivität der Batteriemodule (5) in einem Entlademodus durch eine Strangsteuervorrichtung (9) gemäß einer gewünschten Batteriestrangausgangskapazität von mindestens 1 kWh gesteuert wird.

3. Verfahren nach einem der vorstehenden Ansprüche, wobei die Strangsteuervorrichtung (9) eine erste Ladeverfahrensgruppe der Batteriemodule (5), die gemäß der Sortierung mit dem Batteriestrang (4) verbunden werden sollen, auswählt.

4. Verfahren nach einem der vorstehenden Ansprüche, wobei die Strangsteuervorrichtung (9) ein Batteriemodul aus der ersten Ladeverfahrensgruppe von Batteriemodulen (5) durch ein Batteriemodul, das nicht Teil der ersten Ladeverfahrensgruppe ist, ersetzt, wenn der Unterschied in Ladezustand dazwischen mehr als 0,1 % beträgt oder wenn das Batteriemodul aus der ersten Ladeverfahrensgruppe von Batteriemodulen (5) für mindestens 10 µs [Mikrosekunden] in der ersten Ladeverfahrensgruppe eingeschlossen war.

5. Verfahren nach einem der vorstehenden Ansprüche, wobei das erste Ladezustandsschätzverfahren beendet wird, wenn der Ladezustand der Vielzahl von Batteriemodulen (5) innerhalb eines Bereichs von 100 % bis 90 %, vorzugsweise 100 % bis 95 %, am meisten bevorzugt 100 % bis 98 %, liegt.

6. Verfahren nach einem der vorstehenden Ansprüche, wobei das Batteriemodul eine Vielzahl von in Reihe geschalteten Batteriezellen (10) umfasst, und wobei das Ermitteln der Batteriezellenspannung das Ermitteln der Batteriezellenspannung jeder Batteriezelle (10) des Batteriemoduls einschließt.

7. Verfahren nach einem der vorstehenden Ansprüche, wobei die Strangsteuervorrichtung (9) eine zweite Ladeverfahrensgruppe der Batteriemodule (5), die gemäß der eindeutigen Batteriemodulkennung mit dem Batteriestrang (4) verbunden werden sollen, auswählt.

8. Verfahren nach einem der vorstehenden Ansprüche, wobei die Strangsteuervorrichtung (9) ein Batteriemodul aus der zweiten Ladeverfahrensgruppe von Batteriemodulen (5) durch ein Batteriemodul, das nicht Teil der zweiten Ladeverfahrensgruppe ist, ersetzt, nachdem eine Rotationszeitdauer verstrichen ist.

9. Verfahren nach einem der vorstehenden Ansprüche, wobei ein Ersatz des Batteriemoduls der zweiten Ladeverfahrensgruppe von Batteriemodulen (5) durch ein Batteriemodul, das nicht Teil der zweiten Ladeverfahrensgruppe ist, basierend auf der eindeutigen Batteriemodulkennung bestimmt wird.

10. Verfahren nach einem der vorstehenden Ansprüche, wobei die Strangsteuervorrichtung (9) ein Batteriemodul aus der zweiten Ladeverfahrensgruppe von Batteriemodulen (5) durch ein Batteriemodul, das nicht Teil der zweiten Ladeverfahrensgruppe ist, ersetzt, falls die Batteriezellenspannung aller einzelnen Batteriezellen (10) dieses Batteriemoduls weniger als 0,5 V von dem zuvor bestimmten Wert beträgt.

11. Verfahren nach einem der vorstehenden Ansprüche, wobei ein Batteriemodul, das eine Batteriezelle (10) mit einem Batteriezellenladezustand, der mehr als 0,1 % von dem Ladezustand der übrigen der Batteriezellen (10) dieses Batteriemoduls beträgt, aufweist, dieses Batteriemodul durch die Strangsteuervorrichtung (9) priorisiert wird, wenn die Strangsteuervorrichtung (9) die Konnektivität mit dem Batteriestrang (4) steuert.

12. Verfahren nach einem der vorstehenden Ansprüche, wobei mindestens ein Batteriemodul (5) für eine einzelne Rotation ausgewählt wird.

13. Energiespeicher (1), umfassend eine Vielzahl von Batteriemodulen (5), die durch Schaltanordnung(6)en miteinander verbindbar sind, um einen Batteriestrang (4) auszubilden, wobei jedes der Vielzahl von Batteriemodulen (5) eine Vielzahl von in Reihe geschalteten Batteriezellen (10) und eine Schaltanordnung (6) umfasst,
wobei eine Strangsteuervorrichtung (9) konfiguriert ist, um Batteriemodule (5), die geladen werden sollen, basierend auf einem ersten Ladezustandsschätzverfahren und anschließend basierend auf einem zweiten Ladezustandsschätzverfahren auszuwählen und zu laden,
wobei die Strangsteuervorrichtung (9) konfiguriert ist zum:
a) Ermitteln des Ladezustands der Vielzahl von Batteriemodulen (5) gemäß dem ersten Ladezustandsschätzverfahren, und
b) Auswählen einer ersten Gruppe von Batteriemodulen (5), die basierend auf dem ermittelten Ladezustand geladen werden sollen, und Laden der ersten Gruppe von Batteriemodulen (5),
c) Ermitteln eines Batteriemodulstroms,
d) Ermitteln der Batteriezellenspannung von Batteriezellen (10), die durch die Vielzahl von Batteriemodulen (5) umfasst sind,
wobei die Strangsteuervorrichtung (9) **dadurch gekennzeichnet ist, dass** sie konfiguriert ist zum:
e) Auswählen einer zweiten Gruppe von Batteriemodulen (5), die geladen werden sollen, basierend auf einer eindeutigen Batteriemodulkennung, die mit jedem der Vielzahl von Batteriemodulen (5) verknüpft ist, und Laden der zweiten Gruppe von Batteriemodulen (5) für eine bestimmte Zeitdauer, und
f) Fortsetzen der Schritte c) - e) bis eine Batteriezellenspannung für alle Batteriezellen (10) der Vielzahl von Batteriemodulen einen zuvor bestimmten Wert bei einem zuvor bestimmten Wert des Batteriemodulstroms erreicht hat.

14. Energiespeicher (1) nach Anspruch 13, wobei die Ausgangsleistung des Batteriestrangs (4) zwischen 25 kW und 125 kW mit einer Speicherkapazität zwischen 2,5 kWh und 50 kWh beträgt.

15. Energiespeicher (1) nach einem der Ansprüche 13 bis 14, der ein Verfahren nach einem der Ansprüche 1 bis 11 implementiert.

## Revendications

1. Procédé de charge de modules de batteries (5) connectés dans une chaîne de batteries (4),
dans lequel la connectivité desdits modules de batteries (5) à ladite chaîne de batteries (4) est commandée par un agencement de commutation (6) associé à chaque module individuel desdits modules de batteries (5),
dans lequel les modules de batteries (5) à charger sont sélectionnés en fonction d'un premier procédé d'estimation d'état de charge, puis en fonction d'un second procédé d'estimation d'état de charge,
dans lequel ladite charge est commencée en fonction dudit premier procédé d'estimation d'état de charge qui comporte les étapes suivantes :
a) établir l'état de charge desdits modules de batteries (5),
b) commander la connectivité desdits modules de batteries (5) vers ladite chaîne de batteries (4) selon ledit état de charge établi de manière à équilibrer l'état de charge entre lesdits modules de batteries (5),
dans lequel ledit procédé est **caractérisé en ce que** ladite charge est terminée en fonction dudit second procédé d'estimation d'état de charge qui comporte les étapes suivantes :
c) associer lesdits modules de batteries (5) à une identification unique de module de batteries,
d) établir un courant de module de batteries,
e) établir une tension de cellules de batteries de cellules de batteries (10) comprises par lesdits modules de batteries (5),
f) commander la connectivité desdits modules de batteries (5) à ladite chaîne de batteries (4) selon lesdites identifications de modules de batteries,
g) charger ledit module de batteries connecté à ladite chaîne de batteries (4) pendant un laps de temps déterminé, et
h) continuer les étapes d) à g) jusqu'à ce que lesdites tensions établies pour toutes les cellules de batteries (10) d'un module de batteries atteignent une valeur prédéterminée à une valeur prédéterminée dudit courant de module de batteries.

2. Procédé selon la revendication 1, dans lequel la connectivité desdits modules de batteries (5) dans un mode de décharge est commandée par un dispositif de commande de chaîne (9) selon une capacité de sortie de chaîne souhaitée d'au moins 1 kWh.

3. Procédé selon l'une quelconque des revendications précédentes, dans lequel ledit dispositif de commande de chaîne (9) sélectionne un premier groupe de procédés de charge desdits modules de batteries (5) à connecter à ladite chaîne de batteries (4) selon ledit tri.

4. Procédé selon l'une quelconque des revendications précédentes, dans lequel ledit dispositif de commande de chaîne (9) remplace un module de batteries dudit premier groupe de procédés de charge de modules de batteries (5) par un module de batteries ne faisant pas partie dudit premier groupe de procédés de charge lorsque la différence d'état de charge entre eux est supérieure à 0,1 % ou lorsque ledit module de batteries dudit premier groupe de procédés de charge de modules de batteries (5) a été inclus dans ledit premier groupe de procédés de charge pendant au moins 10 µs [microsecondes].

5. Procédé selon l'une quelconque des revendications précédentes, dans lequel ledit premier procédé d'estimation d'état de charge se termine lorsque l'état de charge de ladite pluralité de modules de batteries (5) est dans une plage de 100 % à 90 %, de préférence 100 % à 95 %, le plus préférablement 100 % à 98 %.

6. Procédé selon l'une quelconque des revendications précédentes, dans lequel ledit module de batteries comprend une pluralité de cellules de batterie connectées en série (10) et dans lequel l'établissement de ladite tension de cellules de batteries comporte l'établissement d'une tension de cellules de batteries de chaque cellule de batteries (10) dudit module de batteries.

7. Procédé selon l'une quelconque des revendications précédentes, dans lequel ledit dispositif de commande de chaîne (9) sélectionne un second groupe de procédés de charge desdits modules de batteries (5) à connecter à ladite chaîne de batteries (4) selon une dite identification unique de module de batteries.

8. Procédé selon l'une quelconque des revendications précédentes, dans lequel ledit dispositif de commande de chaîne (9) remplace un module de batteries dudit second groupe de procédés de charge de modules de batteries (5) par un module de batteries ne faisant pas partie dudit second groupe de procédés de charge après l'écoulement d'un laps de temps de rotation.

9. Procédé selon l'une quelconque des revendications précédentes, dans lequel le remplacement du module de batteries dudit second groupe de procédés de charge de modules de batteries (5) par un module de batteries ne faisant pas partie dudit second groupe de procédés de charge est déterminé en fonction de l'identification unique de module de batteries.

10. Procédé selon l'une quelconque des revendications précédentes, dans lequel ledit dispositif de commande de chaîne (9) remplace un module de batteries dudit second groupe de procédés de charge de modules de batteries (5) par un module de batteries ne faisant pas partie dudit second groupe de procédés de charge si la tension de cellules de batterie de toutes les cellules de batteries individuelles (10) de ce module de batteries est inférieure à 0,5 V de ladite valeur prédéterminée.

11. Procédé selon l'une quelconque des revendications précédentes, dans lequel un module de batteries ayant une cellule de batterie (10) avec un état de charge de cellule de batterie qui est supérieur à 0,1 % de l'état de charge du reste des cellules de batterie (10) de ce module de batterie, ce module de batteries est priorisé par ledit dispositif de commande de chaîne (9) lorsque ledit dispositif de commande de chaîne (9) commande une connectivité à ladite chaîne de batteries (4).

12. Procédé selon l'une quelconque des revendications précédentes, dans lequel au moins un module de batterie (5) est choisi pour une rotation individuelle.

13. Stockage d'énergie (1) comprenant une pluralité de modules de batteries (5) pouvant être connectés entre eux par un agencement de commutation (6) pour former une chaîne de batteries (4), dans lequel chaque module de ladite pluralité de modules de batteries (5) comprend une pluralité de cellules de batteries connectées en série (10) et un agencement de commutation (6),
dans lequel un dispositif de commande de chaîne (9) est configuré pour sélectionner et charger les modules de batteries (5) à charger en fonction d'un premier procédé d'estimation d'état de charge, puis en fonction d'un second procédé d'estimation d'état de charge,
dans lequel ledit dispositif de commande de chaîne (9) est configuré pour :
a) établir l'état de charge de ladite pluralité de modules de batteries (5) selon ledit premier procédé d'estimation de l'état de charge, et
b) sélectionner un premier groupe de modules de batteries (5) à charger en fonction dudit état de charge établi et charger ledit premier groupe de modules de batteries (5),
c) établir un courant de module de batteries,
d) établir une tension de cellule de batterie des cellules de batteries (10) comprises dans ladite pluralité de modules de batteries (5),
dans lequel ledit dispositif de commande de chaîne (9) est **caractérisé en ce qu'**il est configuré pour :
e) sélectionner un second groupe de modules de batteries (5) à charger en fonction d'une identification unique de module de batteries associée à chaque module de ladite pluralité de modules de batteries (5) et charger ledit second groupe de modules de batteries (5) pendant un laps de temps déterminé, et
f) continuer les étapes c) à e) jusqu'à ce qu'une tension de cellules de batteries pour toutes les cellules de batteries (10) de ladite pluralité de modules de batteries ait atteint une valeur prédéterminée à une valeur prédéterminée dudit courant de module de batterie.

14. Stockage d'énergie (1) selon la revendication 13, dans lequel la puissance de sortie de ladite chaîne de batteries (4) est comprise entre 25 kW et 125 kW, avec une capacité de stockage comprise entre 2,5 kWh et 50 kWh.

15. Stockage d'énergie (1) selon l'une quelconque des revendications 13 à 14 mettant en œuvre un procédé selon l'une quelconque des revendications 1 à 11.
